**Europäisches Patentamt**

**European Patent Office**

**Office européen des brevets**

(19)

(11) Veröffentlichungsnummer : **0 368 026 B1**

(12)

# EUROPÄISCHE PATENTSCHRIFT

(45) Veröffentlichungstag der Patentschrift :
**08.04.92 Patentblatt 92/15**

(51) Int. Cl.⁵ : **A21C 5/04**

(21) Anmeldenummer : **89119022.5**

(22) Anmeldetag : **13.10.89**

(54) **Vorrichtung zum Belegen von flachen Teigwarenabschnitten.**

(30) Priorität : **05.11.88 DE 3837674**

(43) Veröffentlichungstag der Anmeldung :
**16.05.90 Patentblatt 90/20**

(45) Bekanntmachung des Hinweises auf die
Patenterteilung :
**08.04.92 Patentblatt 92/15**

(84) Benannte Vertragsstaaten :
**AT BE CH DE ES FR GB GR IT LI NL SE**

(56) Entgegenhaltungen :
**EP-A- 0 015 855**
**BE-A- 540 000**
**DE-A- 3 319 666**
**GB-A- 1 044 741**
**US-A- 4 152 976**

(73) Patentinhaber : **STRICKLER GMBH & CO.**
**Draisstrasse 1**
**W-7553 Muggensturm (DE)**

(72) Erfinder : **Fredericksen, Günter**
**Ersigstrasse 4**
**W-7505 Bruchhausen (DE)**
Erfinder : **Istok, Günter**
**Gustav-von-Struve-Strasse 2**
**W-7550 Rastatt (DE)**
Erfinder : **Dreher, Dieter**
**Emilie-Binder-Strasse 21**
**W-7530 Pforzheim-Sonnenberg (DE)**

(74) Vertreter : **Trappenberg, Hans**
**Wendtstrasse 1**
**W-7500 Karlsruhe 21 (DE)**

## Beschreibung

Die Erfindung betrifft eine Vorrichtung zum Belegen von über ein Transportband herangeführten, flachliegenden flachen Teigwarenstücken mit Beleggut, gebildet durch ein Transportband, einen in einem Gehäuse vorgesehenen, ober- und unterhalb mit einem Durchbruch versehenen Zylinder, in dem drehbar eine an die Zylinderwandung anliegende Aufnahmetrommel angeordnet ist, in der senkrecht zur Drehachse, die parallel zur Ebene des Transportbandes liegt, eine Dosierkammer vorgesehen ist, in der ein mittels Servokraft längsverschiebbarer Dosier- und Ausstoßkolben angeordnet ist.

In der industriellen Herstellung von Lebensmitteln, beispielsweise zum Belegen von "fast-food"-Schnitten oder Pizza-Schnitten, stellt sich die Aufgabe, rieselfähiges Gut auf derartigen Objektabschnitten aufzubringen, so, daß dieses rieselfähige Gut nur die Objektabschnitte belegt und auch jeweils so, daß dieses Belegen stets in gleichbleibender Höhe, also volumendosiert, erfolgt.

Zum Stand der Technik ist eine Einrichtung nach der US-PS 38 92 171 zu benennen, die ebenfalls zum Belegen von flachen, flachliegenden Teigwarenstücken, hier allerdings lediglich mit Brät (Hackfleisch), dient. Die Einrichtung besteht aus einem Gehäuse, in dem ebenfalls in einer zylindrischen Bohrung, deren Achse parallel zur Ebene der flachliegenden Teigwarenstücke verläuft, eine Aufnahmetrommel angeordnet ist und das Gehäuse einen oberen, zu einer Fülleinrichtung führenden Durchbruch und einen unteren Durchbruch aufweist, der über einen Fallschacht zu den zu belegenden Teigwarenstücken führt. In der Aufnahmetrommel dieser Einrichtung ist ein L-förmiger Kanal vorgesehen, der in einer ersten Stellung von dem oberen Durchbruch zu einer im Gehäuse angeordneten Dosierkammer führt. Innerhalb der Dosierkammer ist ein Kolben vorgesehen, der in der zurückgezogenen Stellung ein gewisses Dosiervolumen freigibt, das durch die Fülleinrichtung über diesem L-förmigen Kanal mit dem Brät gefüllt werden kann. In einer zweiten Stellung der Aufnahmetrommel verbindet der L-förmige Kanal die Dosierkammer mit dem unteren Durchbruch. In dieser Stellung wird der Kolben der Dosierkammer vorgeschoben, so daß das zuvor dosierte Volumen durch diesen Kanal hindurch in den unteren Durchbruch verschoben werden kann. Beim Zurückdrehen der Aufnahmetrommel in die erste Stellung gelangt ein Freiraum in der Aufnahmetrommel über den unteren Durchbruch und gleichzeitig auch über einen weiteren zu einer Druckluftleitung führenden Durchbruch des Gehäuses. Durch die Einwirkung dieser Druckluft wird das oberhalb des Fallschachtes anhaftende Brät in den Fallschacht geblasen, was dadurch unterstützt wird, daß die Durchbruchwandung mit Öleinspritzdüsen versehen und stets eingeölt ist. Bei dieser bekannten Einrichtung muß das Beleggut, in diesem Falle Brät, in die Einrichtung hineingedrückt werden mit einem Druck, der bedingt durch den L-förmigen Kanal verhältnismäßig hoch ist. Außerdem wird das in den unteren Durchbruch dosierte Beleggut durch Druckluft in den Fallschacht befördert. Dies setzt einerseits ein Beleggut voraus, das dem Einfülldruck standhalten kann, ohne sich in seiner Struktur zu verändern, andererseits muß das Beleggut einen solchen Zusammenhalt aufweisen, daß es durch die Druckluft tatsächlich vollständig aus dem unteren Durchbruch in den Fallschacht beziehungsweise auf das zu belegende Teigwarenstück geblasen wird. Bei Brät mag sich dieser Zusammenhalt noch ergeben, insbesondere wenn das Ausblasen, wie bei dieser Erfindung vorgesehen, durch Ölen der Durchbruchwandungen erleichtert wird. Bei andersartigem Beleggut, beispielsweise Käsestückchen, Fischen und Fischteilen, Früchten und Salatstücken etc., ist dieses vollständige Ausblasen nicht immer gewährleistet und damit auch nicht das korrekte Belegen der Teigwarenstücke. Außerdem kann derartiges Beleggut durch den bei dieser Einrichtung notwendigen Einfülldruck zusammengequetscht beziehungsweise der in dem Beleggut enthaltene Saft ausgepreßt werden, so daß nicht nur seine Konsistenz, sondern auch sein Aussehen verändert wird. Ein solches ausgepreßtes Beleggut wirkt nicht nur unappetitlich, sondern ist auch nach kurzer Zeit ausgetrocknet und damit nicht mehr zum Verzehr geeignet.

Eine weitere Vorrichtung dieser Art ist beschrieben in der EP-A-00 15 855. Auch diese Vorrichtung dient zum volumetrischen Dosieren von pastösem Gut, also beispielsweise von Brät. Sie weist einen ober- und unterhalb mit einem Durchbruch versehenen Zylinder auf, in dem drehbar eine an die Zylinderwandung anliegende Aufnahmetrommel angeordnet ist, in der senkrecht zur Drehachse eine Dosierkammer vorgesehen ist, wobei in der Dosierkammer ein Dosier- und Ausstoßkolben angeordnet ist. Auch diese Vorrichtung dient jedoch zum volumetrischen Dosieren von pastösen Materialien und kann ebenso wie die Einrichtung nach der US-PS 39 92 171 Teigwarenstücke nicht mit andersartigem Beleggut, beispielsweise Käsestückchen, Fischen und Fischteilen, Früchten und Salatstücken etc. belegen.

Aufgabe der Erfindung ist es, eine weitgehend automatisierte Vorrichtung anzugeben, die imstande ist, auch andersartiges Beleggut, also beispielsweise Käsestückchen, Fische und Fischteile, Früchte und Salatstücke etc., auf solchen Teigwarenstücken aufzubringen und zwar flächengenau entsprechend der Belegfläche der Teigwarenabschnitte.

Gelöst wird diese Aufgabe dadurch, daß zwischen dem Zylinder und dem transportband ein den Außenabmessungen der Teigwarenabschnitte entsprechender Fallschacht angeordnet ist, der aus teleskopartig aus- und einfahrbaren Schachtwandungsabschnitten gebildet ist, daß beim unteren Durchbruch ein parallel zum Transportband verschiebbarer, den Fallschacht abdeckender Schieber angeordnet ist und daß eine Steuerung vorgesehen ist, die die einzelnen Vorrichtungsaggregate wie folgt steuert:

1. Verdrehen der Aufnahmetrommel aus der Füllstellung in die Belegstellung,
2. bei korrekter Lage des zu belegenden Teigwarenabschnittes unterhalb der Vorrichtung
    a) Ausfahren des Teleskopschachtes (Schachtwandungsabschnitte) an die Kanten des Teigwarenabschnittes,
    b) Öffnen des Schiebers,
    c) Verschieben des Dosier- und Ausstoßkolbens in die Endstellung,
    d) Verbringen der Aggregate in die Ausgangsstellung.

Wie angeführt, soll das Beleggut stets nur den jeweiligen Teigwarenabschnitt belegen, was durch die den Außenabmessungen des Teigwarenabschnittes entsprechenden Abmessungen des Fallschachtes ermöglicht wird. Je nach dem verwendeten Beleggut ist es hierbei erforderlich, daß der Fallschacht bis an die Kanten der Teigwarenabschnitte hinabreicht. Um dies zu ermöglichen, ist der Fallschacht als Teleskop-Fallschacht ausgeführt, wobei die Wände des Fallschachtes teleskopartig auf die Kanten des Teigwarenabschnittes hinabgefahren, und, um einem Abstreifen des Belegggutes nach dem Belegen beim Weiterwandern der Teigwarenabschnitte zu begegnen, auch wieder hochgefahren werden können.

Um eine ungleichmäßige Bedeckung der Teigwarenabschnitte durch das aus der Dosierkammer durch den Fallschacht herabfallende Beleggut zu vermeiden, wird zweckmäßigerweise beim unteren Durchbruch des Gehäuses ein parallel zur Ebene des Transportbandes verschiebbarer, den Fallschacht abdeckender Schieber angeordnet, der erst dann, wenn die Dosierkammer in ihrer Endstellung über dem Fallschacht angekommen ist, das Herabfallen beziehungsweise Herausschieben des Belegggutes ermöglicht.

Schließlich ist eine Steuerung vorgesehen, die die einzelnen Vorrichtungsaggregate, beginnend bei der Füllung der Dosierkammer, wie folgt steuert:

1. Verdrehen der Aufnahmetrommel aus der Füllstellung in die Belegstellung,
2. bei korrekter Lage des zu belegenden Teigwarenabschnittes unterhalb der Vorrichtung:
    a) Ausfahren des Teleskopschachtes an die Kanten des Teigwarenabschnittes,
    b) Öffnen des Schiebers,
    c) Verschieben des Dosier- und Ausstoßkolbens in die Endstellung,
    d) Verbringen der Aggregate in die Ausgangsstellung.

Unter 2. ist hier die korrekte Lage des zu belegenden Teigwarenabschnittes angesprochen. Diese korrekte Lage kann durch an sich bekannte Fühler, insbesondere Lichttaster, überprüft und durch Servoglieder gegebenenfalls korrigiert werden. Es ist durchaus möglich, das Transportband durchlaufen zu lassen, wozu gegebenenfalls die gesamte Vorrichtung ein kurzes Stück in Laufrichtung des Transportbandes mitbewegt werden muß. Ansonsten kann auch das Transportband taktmäßig unter der Vorrichtung vorbeigeführt werden.

Insgesamt läßt es die Vorrichtung zu, Teigwarenabschnitte mit Beleggut zu versehen, wobei das Beleggut tatsächlich nur auf diesen Teigwarenabschnitten abgelegt wird, und zwar jeweils in volumenmäßig exakt dosierbarer Menge.

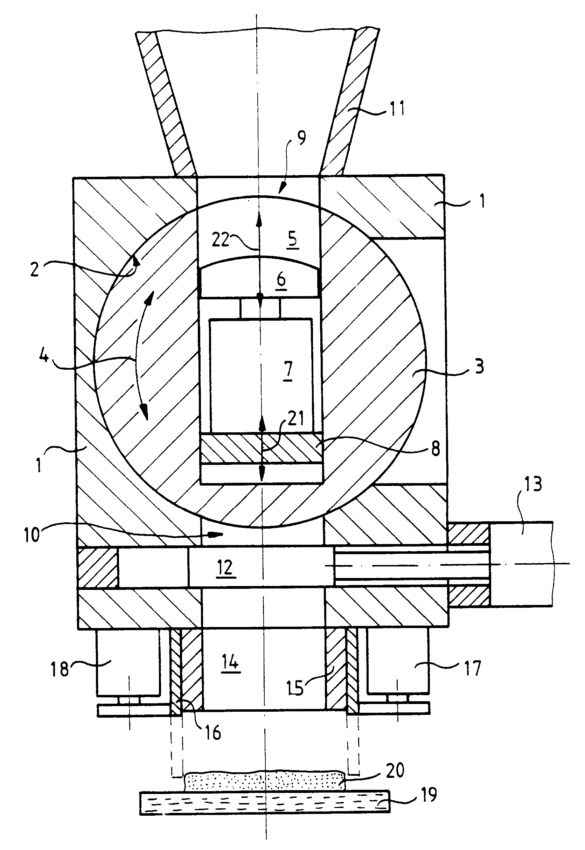

In der Zeichnung ist ein Ausführungsbeispiel des Erfindungsgegenstandes schematisch dargestellt und wird nachstehend näher erläutert. In einem Gehäuse (1) mit zylindrischer Innenwandung (2) ist eine Aufnahmetrommel (3) drehbar angeordnet. Die Aufnahmetrommel (3) dreht sich hierbei, wie durch die Pfeile 4 angedeutet, jeweils lediglich um 180°. Innerhalb der Aufnahmetrommel (3) befindet sich eine Dosierkammer (5), deren Boden durch einen Dosier- und Ausstoßkolben (6) gebildet wird. Der Dosier- und Ausstoßkolben (6) ist durch einen Pneumatikzylinder (7), der auf einer, in der Höhe verstellbaren, Tragplatte (8) angeordnet ist, in der Längsrichtung der Dosierkammer (5) verschiebbar. Das Gehäuse (1) ist jeweils ober- und unterseitig mit einem Durchbruch (9, 10) versehen. Am oberen Durchbruch (9) ist ein Vorratsbehälter (11) angebracht, an dem ein Rüttler befestigt sein kann, um ein Verkleben beziehungsweise eine Brückenbildung des Belegggutes zu vermeiden. Der untere Durchbruch (10) ist durch einen Schieber (12) abgeschlossen. Dieser Schieber (12) ist mit einem Pneumatikzylinder (13) verbunden, der in der eingefahrenen Stellung den Durchbruch (10) freigibt. Unterhalb des Schiebers (12) beziehungsweise des Durchbruches (10) befindet sich ein Fallschacht (14) mit teleskopartig ineinanderschiebbaren Schachtwandungsabschnitten (15, 16). Der Schachtwandungsabschnitt (15) ist hierbei fest mit dem Gehäuse (1) verbunden; auf seiner Außenseite kann der weitere Schachtwandungsabschnitt (16) teleskopartig nach unten durch auf sie einwirkende weitere Pneumatikzylinder (17, 18) verschoben werden (die ausgefahrene Stellung ist gestrichelt dargestellt). Im ausgefahrenen Zustand liegen diese Schachtwandungsabschnitte (16) an den Kanten des zu belegenden, durch ein Transportband (19) herangeführten, Teigwarenabschnittes (20) an.

Der Belegvorgang wird wie folgt durchgeführt: Nach Füllen des Vorratsbehälters (11) und damit auch der Dosierkammer (5), wobei das Dosiervolumen durch Verschieben der Tragplatte (8) - dargestellt durch den Doppelpfeil 21 - eingestellt werden kann, wird die Aufnahmetrommel (3) um 180° verdreht, so daß die Öffnung der Dosierkammer (5) nach unten weist und sich oberhalb des Schiebers (12) befindet. Liegt der Teigwarenabschnitt (20) exakt unterhalb der Vorrichtung, wird der durch die Schachtwandungsabschnitte (15, 16) gebildete Teleskopschacht durch die Pneumatikzylinder (17, 18) ausgefahren, so daß die Schachtwandungsabschnitte (16) an den Kanten des Teigwarenabschnittes (20) anliegen. Darauf wird der Schieber (12) durch den Pneumatikzylinder (13) aus dem Bereich des Fallschachtes (14) verschoben, so daß das Beleggut aus der Dosierkammer (5) nach unten auf den Teigwarenabschnitt (20) fallen kann. Um auch exakt sämtliches Beleggut aus der Dosierkammer (5) auszuschieben, wird der Dosier- und Ausstoßkolben (6), wie durch den Doppelpfeil 22 angedeutet, ausgeschoben, so daß kein Beleggut innerhalb der Dosierkammer (5) verbleibt. Danach wird der Teleskopschacht wieder durch die Pneumatikzylinder (17, 18) eingefahren, der Dosier- und Ausstoßkolben (6) in seine Ruhelage gebracht, der Schieber (12) wieder geschlossen und die Aufnahmetrommel (3) wieder in die gezeigte Füllstellung verdreht.

## Patentansprüche

1. Vorrichtung zum Belegen von über ein Transportband (19) herangeführten, flachliegenden flachen Teigwarenstücken (20) mit Beleggut, gebildet durch ein Transportband (19), einen in einem Gehäuse (1) vorgesehenen, ober- und unterhalb mit einem Durchbruch versehenen Zylinder (2), in dem drehbar eine an die Zylinderwandung (2) anliegende Aufnahmetrommel (3) angeordnet ist, in der senkrecht zur Drehachse, die parallel zur Ebene des Transportbandes (19) liegt, eine Dosierkammer (5) vorgesehen ist, in der ein mittels Servokraft längsverschiebbarer Dosier- und Ausstoßkolben (6) angeordnet ist,
dadurch gekennzeichnet, daß zwischen dem Zylinder und dem Transportband (19) ein den Außenabmessungen der Teigwarenabschnitte (20) entsprechender Fallschacht (14) angeordnet ist, der aus teleskopartig aus- und einfahrbaren Schachtwandungsabschnitten (5, 16) gebildet ist, daß beim unteren Durchbruch (10) ein parallel zum Transportband (19) verschiebbarer, den Fallschacht (14) abdeckender Schieber (12) angeordnet ist und daß eine Steuerung vorgesehen ist, die die einzelnen Vorrichtungsaggregate wie folgt steuert:
1. Verdrehen der Aufnahmetrommel (3) aus der Füllstellung in die Belegstellung,
2. bei korrekter Lage des zu belegenden Teigwarenabschnittes (20) unterhalb der Vorrichtung:
 a) Ausfahren des Teleskopschachtes (15, 16) an die Kanten des Teigwarenabschnittes (20),
 b) Öffnen des Schiebers (12),
 c) Verschieben des Dosier- und Ausstoßkolbens (6) in die Endstellung,
 d) Verbringen der Aggregate in die Ausgangsstellung.

## Claims

1. Apparatus for coating flat dough products (20) which are in a condition of lying flat and which are supplied by way of a conveyor belt (19), with coating material, formed by a conveyor belt (19), a cylinder (2) which is disposed in a housing (1) and which is provided above and below with an opening and in which a receiving drum (3) which bears against the cylinder wall (2) is rotatably arranged, a metering chamber (5) being provided in the receiving (3) perpendicularly to the axis of rotation which is parallel to the plane of the conveyor belt (19), a metering and ejection piston (6) being arranged in the metering chamber and being longitudinally displaceable by means of servo force,
characterised in that
disposed between the cylinder and the conveyor belt (19) is a drop shaft (14) which corresponds to the outside dimensions of the dough portions (20) and which is formed from telescopically extendable and retractible shaft wall portions (15, 16), that arranged at the lower opening (10) is a slider (12 ) which is displaceable parallel to the conveyor belt (19) and which covers over the drop shaft (14), and that there is provided a control means which controls the individual items of the apparatus as follows:
1. rotation of the receiving drum (3) from the filling position into the coating position,
2. in the correct position of the dough portion (20) to be coated, beneath the apparatus:
 a) extension of the telescopic shaft (15, 16) to the edges of the dough portion (20),
 b) opening of the slider (12),
 c) displacement of the metering and ejection piston (6) into the end position, and
 d) movement of the items of the apparatus into the starting position.

## Revendications

1. Appareil pour recouvrir d'une garniture des morceaux plats (20) d'un produit de pâte (sous la forme d'une pâte ou fait d'une pâte) disposés à plat et amenés sur une bande de transport (19), appareil qui est formé d'une bande de transport (19) et d'un cylindre (2) prévu dans un carter (1) et présentant une ouverture en haut et en bas, dans lequel est disposé rotatif un tambour récepteur (3) appliqué contre la paroi du cylindre (2) et dans lequel est prévu, perpendiculairement à l'axe de rotation, lequel est parallèle au plan de la bande de transport (19), une chambre de dosage (5) contenant un piston doseur et éjecteur (6) déplaçable longitudinalement au moyen d'une force d'asservissement,

caractérisé en ce

qu'il comprend, entre le cylindre et la bande de transport (19), un conduit de chute (14) correspondant aux dimensions extérieures des tranches de produit de pâte (20) et qui est formé de sections de paroi de conduit (15, 16) extensibles et rétractables télescopiquement, qu'un tiroir (12) recouvrant le conduit de chute (14) est disposé mobile parallèlement à la bande de transport (19) au droit de l'ouverture inférieure (10) et que l'appareil comprend une commande qui actionne les différents organes de l'appareil comme suit:

1. rotation du tambour récepteur (3) de la position de remplissage à la position de garnissage,
2. lorsque la tranche de produit de pâte (20) à garnir occupe la position correcte sous l'appareil:
    a) extension du conduit télescopique (15, 16) jusqu'aux bords de la tranche de produit de pâte (20),
    b) ouverture du tiroir (12),
    c) déplacement du piston doseur et éjecteur (6) à la position de fin de course et
    d) rappel des organes à la position de départ.